# EUROPÄISCHE PATENTANMELDUNG

(11) **EP 3 434 650 A1**
(43) Veröffentlichungstag der Anmeldung: **30.01.2019**
(21) Anmeldenummer: 17182796.7
(22) Anmeldetag: 24.07.2017
(51) Int. Cl.: C02F 1/461, C25B 11/04, C25B 15/04, C25B 1/13, C25B 9/08, C02F 1/467

(54) **ELEKTRODENANORDNUNG**

(71) Anmelder: Geberit International AG, 8645 Jona (CH)
(72) Erfinder: GMÜR, David, 8645 Jona (CH)
(74) Vertreter: Frischknecht, Harry Ralph

(57) **Zusammenfassung**

Eine Elektrodenanordnung (1) umfasst ein Gehäuse (2) mit einem Innenraum (3), der mit einer umlaufenden Seitenwand (4) begrenzt ist, und mit einem in den Innenraum (3) mündenden Wassereingang (5) sowie einem von Innenraum (3) abgehenden Wasserausgang (6), eine im Innenraum (3) angeordnete Elektrodeneinheit (7) mit zwei Elektroden (8, 9), die jeweils Lagerflächen (10) und ein wirksamer Elektrodenbereich (11) aufweisen, und einer zwischen den Elektroden (8, 9) liegenden Membran (12), sowie mindestens ein Federelement (13), welches zwischen der Seitenwand (4) und der Elektroden (8, 9) derart angeordnet ist, dass die beiden Elektroden (8, 9) gegeneinander gedrückt werden.

## Beschreibung

### TECHNISCHES GEBIET

Die vorliegende Erfindung betrifft eine Elektrodenanordnung nach dem Oberbegriff von Anspruch 1.

### STAND DER TECHNIK

Aus der EP 1 730 080 ist eine Elektrodenanordnung zur elektrochemischen Behandlung von Wasser bekannt geworden. Dabei werden die Elektroden mit Wasser durchstömt und gleichzeitig mit elektrischer Energie versorgt. Hierdurch wird ein Oxidationsmittel aus dem Wasser produziert, wodurch die Zahl der Keime im Wasser verkleinert werden kann.

### DARSTELLUNG DER ERFINDUNG

Der vorliegenden Erfindung liegt die Aufgabe zugrunde, eine Elektrodenanordnung für den Einsatz im Sanitärbereich, insbesondere bei Armaturen oder Dusch-WC oder Wasserklosetts oder Urinalen, anzugeben.

Eine besonders bevorzugte Aufgabe ist es, eine Elektrodenanordnung anzugeben, welche in grossen Stückzahlen derart herstellbar ist, dass die Desinfektionswirkung bei allen hergestellten Elektroden möglichst gleich ist. Eine weitere optionale Aufgabe ist es, eine Elektrodenanordnung anzugeben, welche effizient, insbesondere in grossen Stückzahlen, prozesssicher herstellbar ist.

Insbesondere die erstgenannte Aufgabe löst der Gegenstand nach Anspruch 1. Demgemäss umfasst eine Elektrodenanordnung ein Gehäuse mit einem Innenraum, der mit einer umlaufenden Seitenwand begrenzt ist, und mit einem in den Innenraum mündenden Wassereingang sowie einem von Innenraum abgehenden Wasserausgang, eine im Innenraum angeordnete Elektrodeneinheit mit zwei Elektroden, die jeweils Lagerflächen und ein wirksamer Elektrodenbereich aufweisen, und einer zwischen den Elektroden liegenden Membran, und mindestens ein Federelement. Das Federelement ist zwischen der Seitenwand und den Elektroden derart angeordnet, dass die beiden Elektroden gegeneinander gedrückt werden.

Mit dem Federelement, welches die beiden Elektroden gegeneinander drückt und so auch die Membran zwischen den Elektroden klemmt, kann im Rahmen der Elastizität des Federelementes ein Anspressdruck auf die Elektroden geschaffen werden. Das Paket umfassend die beiden Elektroden und die Membran wird durch das Federelement zusammengespannt bzw. zusammengedrückt bzw. im Gehäuse verklemmt.

Durch die Elastizität des Federelementes wird erreicht, dass Fertigungstoleranzen ausgeglichen werden können, wobei die durch das Federelement aufgebrachte Kraft auf die Elektroden aufgrund der Elastizität des Federelementes nur in geringem Mass variiert. Das heisst, dass auch beim Ausgleichen der Toleranz das Federelement im Wesentlichen die gleiche Kraft aufbringt. Hierdurch wird erreicht, dass der Anpressdruck der Elektroden im Rahmen der Fertigungstoleranzen und somit die Desinfektionswirkung von allen hergestellten Elektroden im Wesentlich konstant bzw. gleichartig ist. Durch das Federelement können mechanische Toleranzen im Innenraum ausgeglichen werden.

Das Federelement ist zudem auch vorteilhaft, weil es im Rahmen seiner Elastizität bei Veränderungen während des Betriebes der Elektrodenanordnung die Kraft im Wesentlichen konstant hält.

Mit dem Federelement werden die Elektroden sowie die Membran im Innenraum des Gehäuses gegeneinander gedrückt und werden so gegeneinander verklemmt.

Unter der Ausdrucksweise "Federelement" wird ein Element verstanden, das sich bei äusserem Druck elastisch verformt und bei Wegfallen des äusseren Druckes wieder in die Ursprungslage zurückgeht.

Das Federelement ist elastisch ausgebildet und vorzugsweise aus Gummi oder einem elastischen Kunststoff. Andere Materialien sind auch denkbar. Beispielsweise kann das Federelement auch aus einem federnden Metall, wie aus Stahl, Titan oder Chromstahl, beispielsweise in der Gestalt einer Blattfeder, ausgebildet sein.

Die Elektrodeneinheit mit den beiden Elektroden und der dazwischen liegenden Membran wirken als elektrochemische Zelle und dienen der Herstellung von Ozon, insbesondere von gasförmigem Ozon, aus Wasser. Das Ozon wirkt dabei als Desinfektionsmittel des durchstömenden Wassers. Das zu desinfizierende Wasser wird vom Wassereingang durch den Innenraum mit der Elektrodeneinheit hindurchgeführt und verlässt den Innenraum dann wieder über den Wasserausgang. Dabei wird das Wasser mit dem von der Elektrodeneinheit aus dem Wasser erzeugten Ozon desinfiziert.

Unter der Ausdrucksweise "wirksamer Elektrodenbereich" wird der Bereich der Elektrode verstanden, welcher massgeblich an der Herstellung des Ozons beteiligt ist. Vorzugsweise ist die Elektrode im wirksamen Elektrodenbereich derart ausgebildet, dass die Oberfläche der Elektrode in diesem Bereich erhöht wird und/oder dass die Strömung des durchfliessenden Wassers in diesem Bereich turbulent wird, so dass die Ausbeute des hergestellten Ozons erhöht wird. Besonders umfasst der wirksame Elektrodenbereiche Stege, welche aus der Ebene der Lagerfläche hinausgebogen werden.

Unter der Ausdrucksweise "Lagerfläche" wird eine Fläche der Elektrode verstanden, an welcher die Elektrode gelagert ist. Die Lagerfläche ist vorzugsweise eben oder flach ausgebildet.

Die Elektroden sind vorzugsweise aus diamantbeschichtetem Silicium. Die Membran ist vorzugsweise eine Polymermembran.

Vorzugsweise erstrecken sich die Lagerflächen auf mindestens zwei Seiten des wirksamen Elektrodenbereichs. Das mindestens eine Federelement wirkt dabei indirekt oder direkt auf die beiden Lagerflächen ein. Durch die Anordnung der beiden Lagerflächen auf zwei Seiten des wirksamen Elektrodenbereichs wird erreicht, dass die beiden Elektroden über deren gesamte Fläche gleichmässige zusammengedrückt werden.

Besonders bevorzugt haben die beiden Lagerflächen die Gestalt von zwei parallel und beabstandet zueinander liegenden Streifen, wobei sich die wirksame Elektrodenfläche zwischen diesen beiden Streifen befindet. Die wirksame Elektrodenfläche wird, wie oben erwähnt, besonders bevorzugt durch Stege gebildet. In dem Fall erstrecken sich die Stege des wirksamen Elektrodenbereichs zwischen den beiden Streifen.

Vorzugsweise erstreckt sich das Federelement im Wesentlichen in Fliessrichtung des durch den Innenraum hindurchströmenden Wassers. Hierdurch wird sichergestellt, dass das Federelement nicht als unnötigen Strömungswiderstand wirkt.

Besonders bevorzugt ist je ein Federelement seitlich zum wirksamen Elektrodenbereich angeordnet, welche Federelemente zugleich als Leitelement für die Strömung wirkt. Das heisst, die Strömung kann durch die Federelemente bevorzugt beeinflusst werden.

Vorzugsweise ist beidseitig zu den Elektroden mindestens je ein Federelement angeordnet, wobei die besagten Federelemente bezüglich des Innenraums gegenüber einander angeordnet sind. Das heisst, die zwei gegenüberliegenden Federelemente wirken an gleicher Stelle auf die Elektroden ein. Hierdurch kann eine gute und gleichmässig von beiden Seiten wirkende Krafteinwirkung erreicht werden.

Vorzugsweise werden die Elektroden durch die Federelemente im Innenraum des Gehäuses eingeklemmt.

Vorzugsweise ist die Lagerfläche der einen Elektrode deckungsgleich mit der Lagerfläche der anderen Elektrode angeordnet. Die Rückseiten der Lagerflächen der beiden Elektroden sind dabei in Einbaulage über die Membran miteinander in flächigem Kontakt. Hierdurch wird eine gleichmässige Anpressung erreicht.

Besonders bevorzugt wirkt auf jede der Lagerflächen mindestens ein Federelement ein. Das heisst, dass jede der Lagerflächen mit einer Kraft beaufschlagt wird, was wiederum vorteilhaft für das Andrücken der beiden Elektroden gegeneinander ist.

In einer ersten Ausführungsform ist auf beiden Seiten der beiden Elektroden mindestens je ein Federelement angeordnet. Beim Vorhandensein der beiden Streifen sind vorzugsweise pro Streifen je ein Federelement angeordnet.

In einer anderen Ausführungsform ist das Federelement umlaufend ausgebildet und erstreckt sich um die Lagerbereiche der beiden Elektroden herum. Beispielsweise kann das Federelement in dieser Ausführungsform die Gestalt eines umlaufenden Rings aufweisen.

Vorzugsweise umfasst die Elektrodenanordnung weiter ein Trägerelement. Die Elektroden sind in einer Elektrodenaufnahme im Trägerelement derart gelagert, dass der wirksame Elektrodenbereich und die Lagerflächen vom Trägerelement frei liegen. Das Trägerelement hat den Vorteil, dass die beiden Elektroden und die Membran vor dem Einsetzen in den Innenraum am Trägerelement vormontiert werden können und dann mit dem Trägerelement in den Innenraum eingesetzt werden.

Besonders bevorzugt weist das Trägerelement zwei zusammenfügbare Trägerteile auf, wobei die eine Elektrode im einen Trägerteil und die andere Elektrode im anderen Trägerteil schwimmend gelagert ist. Unter einer schwimmenden Lagerung wird verstanden, dass sich die Elektroden im Trägerteil innerhalb eines vorbestimmten Spiels bewegen können. Diese Bewegbarkeit hat den Vorteil, dass die Elektroden mit dem Federelement gut gegeneinander gedrückt werden können. Das Federelement wirkt durch das Trägerelement hindurch auf die vom Trägerelement frei liegenden Bereiche der Lagerflächen ein.

Die Membran liegt vorzugsweise zwischen den beiden Trägerteilen und wird von diesem geklemmt.

Besonders bevorzugt weist das Trägerelement eintrittsseitig eine bezüglich der Strömung optimierte Kante auf, wobei die Kante derart optimiert ist, dass dem wirksamen Elektrodenbereich eine turbulente Strömung zuführbar ist. Hierdurch ergeht der Vorteil, dass das hergestellte Ozon gut mit dem Wasser vermischt wird.

Besonders bevorzugt weist das Trägerelement Lagerflächen auf, mit welchen das Trägerelement in einer Aufnahme im Innenraum gelagert ist.

Besonders bevorzugt sind beide Trägerteile identisch zueinander ausgebildet. Dies hat den Vorteil, dass die Herstellkosten gesenkt werden können.

Vorzugsweise weist die Elektrodenanordnung weiter ein Strömungsführungselement auf, welches die Elektroden mindestens im wirksamen Elektrodenbereich umgibt, und welches Strömungsführungselement im Innenraum des Gehäuses platzierbar ist. Mit dem Strömungsführungselement kann die Strömung im Bereich der Elektroden derart beeinflusst werden, dass die Ausbeute des Ozons erhöht werden kann.

Vorzugsweise umfasst das Strömungsführungselement zwei Schalen, welche beidseitig zu den Elektroden angeordnet sind, wobei die Schalen mit einer der Elektrode zugewandten Strömungsoberfläche derart mit einem Abstand beabstandet zur wirksamen Elektrodenoberfläche liegen, dass ein Wasserführungskanal geschaffen wird, durch welchen zu behandelndes Wasser hindurch geführt wird.

Vorzugsweise weist das Strömungsführungselement eine Eintrittsöffnung und eine Austrittsöffnung auf, wobei der Wassereingang in die Eintrittsöffnung mündet und wobei die Austrittsöffnung zum Wasserausgang führt.

Vorzugsweis ist das Federelement am Strömungsführungselement, insbesondere an der Schale, integral angeformt. Es handelt sich dabei vorzugsweise um ein ZweiKomponenten-Spritzgussteil. Das Strömungsführungselement und das Federelement bzw. die Schale und das Federelement bilden dabei eine einstückige Struktur. Hierdurch wird die Montage vereinfacht.

Alternativerweise ist das Federelement als separates Element ausgebildet und umgibt die Elektroden sowie gegebenenfalls das Trägerelement umlaufend.

Vorzugsweise ragt das Trägerelement mindestens mit der Elektrodenaufnahme in das Strömungsführungselement, insbesondere zwischen die beiden Schalen, ein. Weiter wirkt das Federelement durch das Trägerelement hindurch auf die vom Trägerelement frei liegenden Bereiche der Lagerflächen ein.

Das heisst, dass die beiden Schalen einen Zwischenraum bereitstellen, in welchen dann das Trägerelement mit der Elektrodeneinheit einragt.

Vorzugsweise sind die beiden Schalen miteinander über eine Raststruktur verbindbar, wobei die Raststruktur derart ausgebildet ist, dass eine Bewegung der beiden Schalen innerhalb eines vorbestimmten Spiels ermöglicht wird. Hierdurch wird sichergestellt, dass bei einem Druck von aussen auf die beiden Schalen, der Druck auf die zwischen den beiden Schalen liegenden Federelemente und über die Federelemente auch auf die beiden Elektroden bzw. die Membran weitergeben werden kann.

Vorzugsweise liegen die Aussenseiten der Schalen an der Seitenwand des Innenraums an. Das heisst, dass über diesen Kontakt die beiden Schalen im Innenraum gehalten werden und so der Druck auf die Federelemente aufgebracht wird.

Vorzugsweise ist pro Elektrode weiter ein Kontaktelement, insbesondere ein Kontaktblech angeordnet, über welches die Elektrode mit elektrischer Energie versorgbar ist. Vorzugsweise liegt das Kontaktelement flächig auf der Lagerfläche der Elektrode auf, wobei das Federelement vorzugsweise über das Kontaktelement auf die Lagerfläche wirkt. Das heisst, dass mit dem Federelement sowohl die Elektroden zusammengedrückt werden als auch dass mit dem Federelement das Kontaktelement gegen die Elektroden gedrückt werden. Es handelt sich dabei für die Lagerflächen der Elektrode um einen indirekten Kontakt mit dem Federelement. Ein direkter Kontaktzwischen Federelement und Elektrode ist auch möglich, wobei das Kontaktelement dann anderweitig in Kontakt mit der Elektrode gebracht werden muss.

Vorzugsweise liegen der Wassereingang und der Wasserausgang in einer gemeinsamen, die Fliessrichtung definierenden Achse, wobei quer zur Achse gesehen der Innenraum eine Zugangsöffnung aufweist, durch welche die Elektrodeneinheit gegebenenfalls mit dem Trägerelement und/oder gegebenenfalls mit dem Strömungsführungselement und/oder gegebenenfalls mit den Kontaktelementen einsetzbar ist, wobei die Zugangsöffnung sich im Wesentlichen vollständig über den Querschnitt des Innenraums erstreckt, und wobei die Zugangsöffnung durch einen optionalen Deckel verschlossen ist.

Zusammengefasst sind vorzugsweise im Wesentlichen folgende verschiedene Varianten bezüglich der Elektrodenanordnung denkbar, nämlich:
- eine erste Variante umfassend das Gehäuse, die beiden Elektroden mit der Membran und die Federelemente; oder
- eine zweite Variante umfassend das Gehäuse, die beiden Elektroden mit der Membran und die Federelemente sowie das Trägerelement; oder
- eine dritte Variante umfassend das Gehäuse, die beiden Elektroden mit der Membran und die Federelemente sowie das Trägerelement und das Wasserführungselement; oder
- eine vierte Variante umfassend das Gehäuse, die beiden Elektroden mit der Membran und die Federelemente sowie das Wasserführungselement.

Bei allen Varianten kann das Federelement direkt auf die Elektroden wirken oder aber über die Kontaktelemente.

Ein Verfahren zur Montage einer Elektrodenanordnung nach obiger Beschreibung ist, dadurch gekennzeichnet, dass
die beiden Elektroden und die Membran relativ zueinander positioniert werden;
bei Vorhandensein des Trägerelementes die Elektroden in das Trägerelement eingesetzt werden;
bei Vorhandensein der Kontaktelemente die Kontaktelemente an die Elektroden angelegt werden;
bei Vorhandensein des Strömungsführungselement die Elektroden ggf. mit Teilen des Trägerelement und Teil der Kontaktelementen in das Strömungsführungselement eingesetzt werden;
in einem weiteren Schritt die Elektroden ggf. mit dem Trägerelement und/oder ggf. mit den Kontaktelementen und/oder ggf. mit dem Strömungsführungselement in den Innenraum des Gehäuses eingesetzt werden und dort mit der Federkraft des Federelementes gegeneinander gedrückt werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Elektrodenanordnung nach einer ersten Ausführungsform der vorliegenden Erfindung;
- Fig. 2: eine Schnittdarstellung der Elektrodenanordnung nach Figur 1;
- Fig. 3: eine Explosionsdarstellung von Teilen der Elektrodenanordnung nach Figur 1;
- Fig. 4: eine weitere Explosionsdarstellung von Teilen der Elektrodenanordnung nach Figur 1;
- Fig. 5: eine perspektivische Explosionsdarstellung der Elektrodenanordnung nach einer zweiten Ausführungsform;
- Fig. 6: eine weitere Explosionsdarstellung von Teilen der Elektrodenanordnung nach Figur 5; und
- Fig. 7: eine Schnittdarstellung der Elektrodenanordnung nach Figur 5.

### BESCHREIBUNG BEVORZUGTER AUSFÜHRUNGSFORMEN

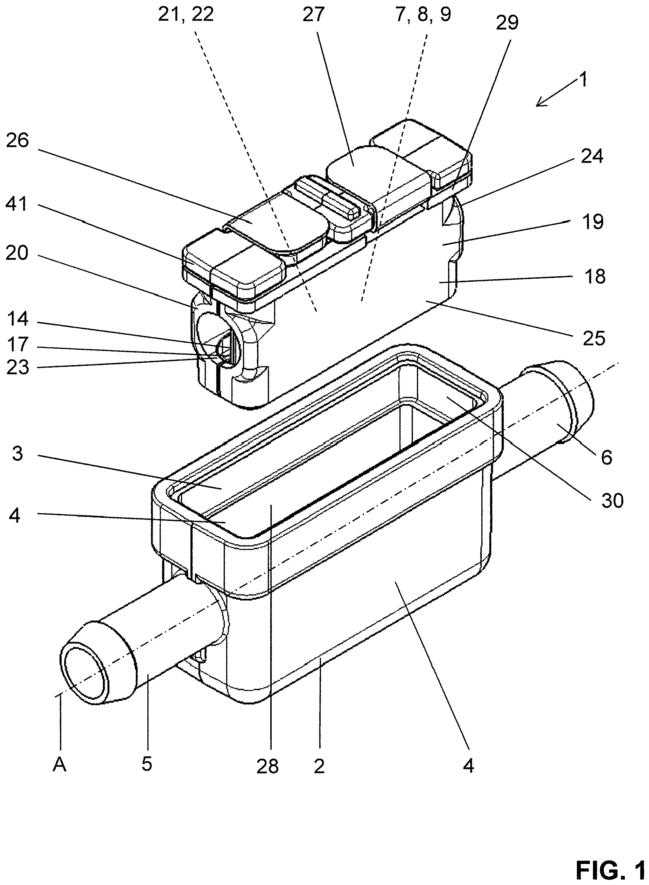

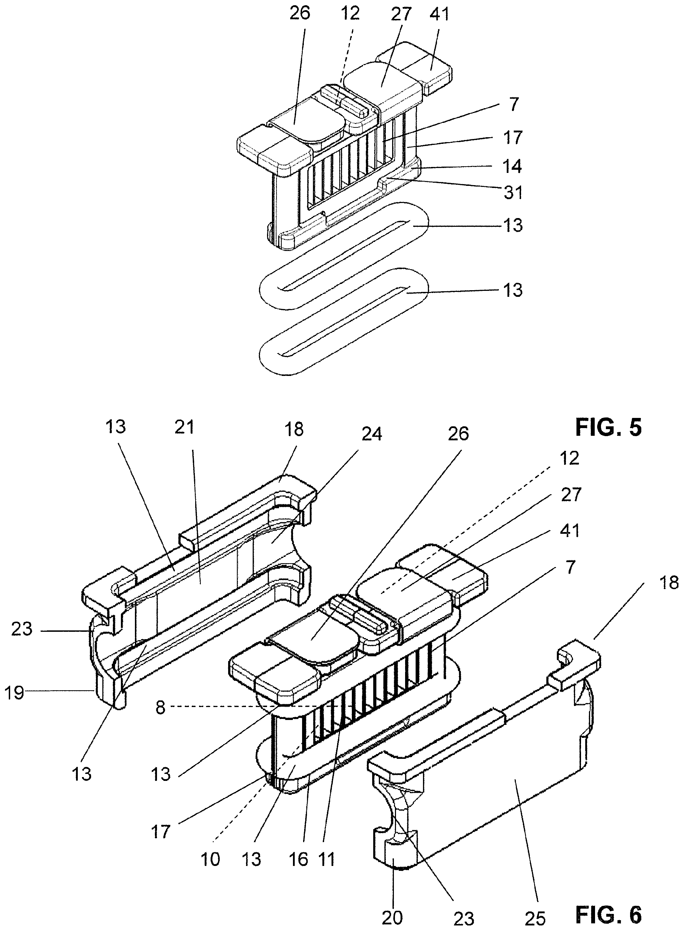

In den Figuren wird eine Elektrodenanordnung 1 zur Desinfektion von Wasser gezeigt. Die Elektrodenanordnung 1 wird in den Figuren 1 bis 4 gemäss einer ersten Ausführungsform und in den Figuren 5 bis 7 nach einer zweiten Ausführungsform dargestellt. Gleiche Teile tragen dabei gleiche Bezugszeichen.

In der Figur 1 wird die Elektrodenanordnung 1 in einer perspektivischen Explosionsdarstellung gezeigt. Die Elektrodenanordnung 1 umfasst ein Gehäuse 2 mit einem Innenraum 3, der mit einer umlaufenden Seitenwand 4 begrenzt ist. Das Gehäuse weist weiter ein in den Innenraum 3 mündenden Wassereingang 5 sowie ein vom Innenraum 3 abgehenden Wasserausgang 6 auf. Der Wassereingang 5 wie auch der Wasserausgang 6 sind in der gezeigten Ausführungsform als Anschlussstutzen ausgebildet und es kann eine Wasserleitung an diesen Anschlussstutzen angeschlossen werden. Andere Ausbildungen sind auch denkbar.

Weiter umfasst die Elektrodenanordnung 1 eine im Innenraum 3 angeordnete Elektrodeneinheit 7. Mit der Elektrodeneinheit 7 kann aus dem durchfliessenden Wasser Ozon hergestellt werden, welches Ozon sich dann mit dem Wasser mischt und eine desinfizierende Wirkung für das Wasser hat. Die Elektrodeneinheit 7 kann dabei in den Innenraum 3 eingesetzt werden und wir im Innenraum gelagert. Die in den Figuren gezeigte Elektrodeneinheit 7 ist in beiden Ausführungsformen mit weiteren Elementen umgeben, welche dann in der Folge genauer erläutert werden.

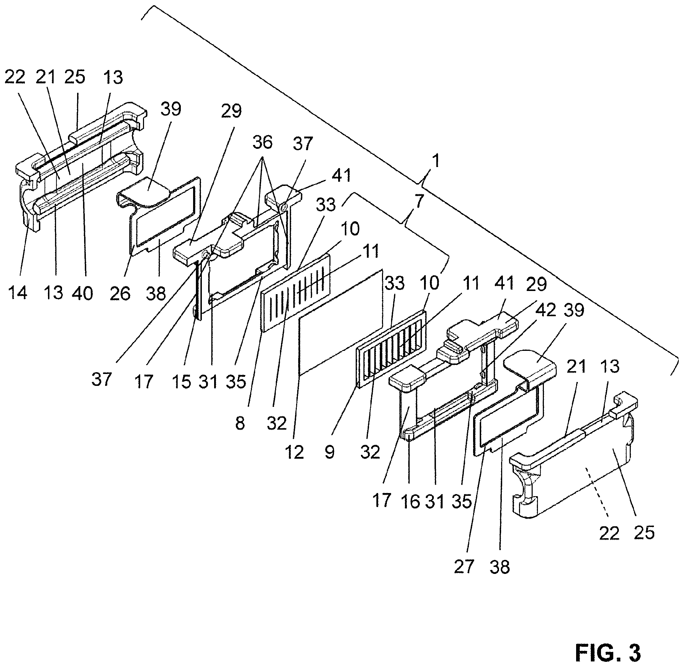

Anhand der Explosionsdarstellung der Figur 3 wird die Elektrodeneinheit 7 genauer erläutert. Die Elektrodeneinheit 7 umfasst zwei Elektroden 8, 9, die jeweils Lagerflächen 10 und ein wirksamer Elektrodenbereich 11 aufweisen. Weiter liegt zwischen den beiden Elektroden 8, 9 eine Membran 12.

Die Lagerfläche 10 hat in der gezeigten Ausführungsform die Form von Streifen 33, welche sich wie ein Rahmen um den wirksamen Elektrodenbereich 11 herumerstrecken. Über die Lagerfläche 10 wird die Elektrode 8, 9 im Innenraum des Gehäuses 2 gelagert.

Der wirksame Elektrodenbereich 11 wird in der gezeigten Ausführungsform durch Stege 32 bereitgestellt. Die Stege 32 verbinden dabei zwei benachbarte Streifen 33. Durch den wirksamen Elektrodenbereich 11 wird das Ozon hergestellt.

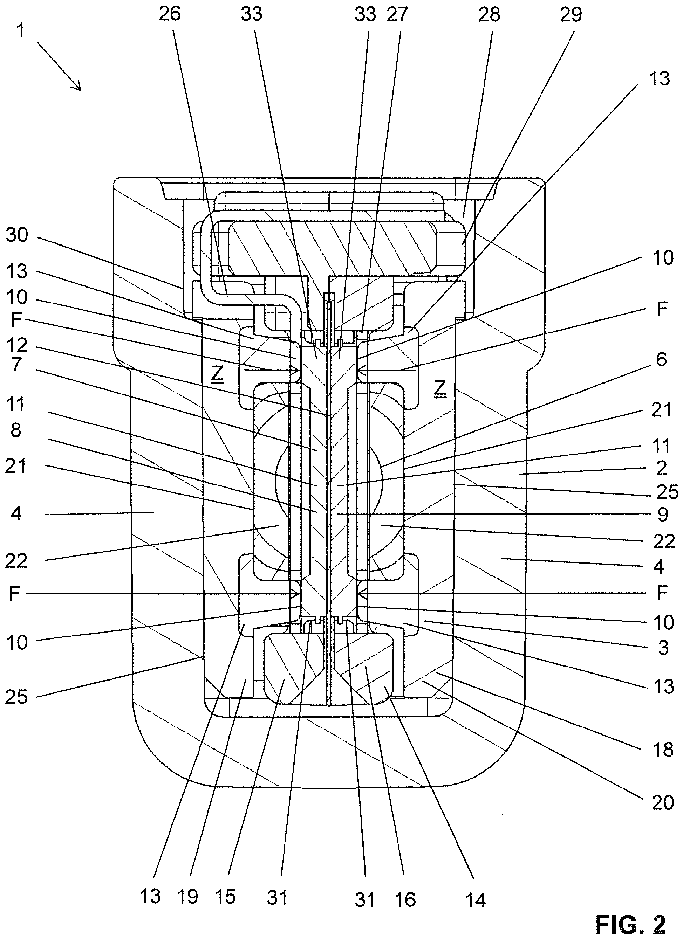

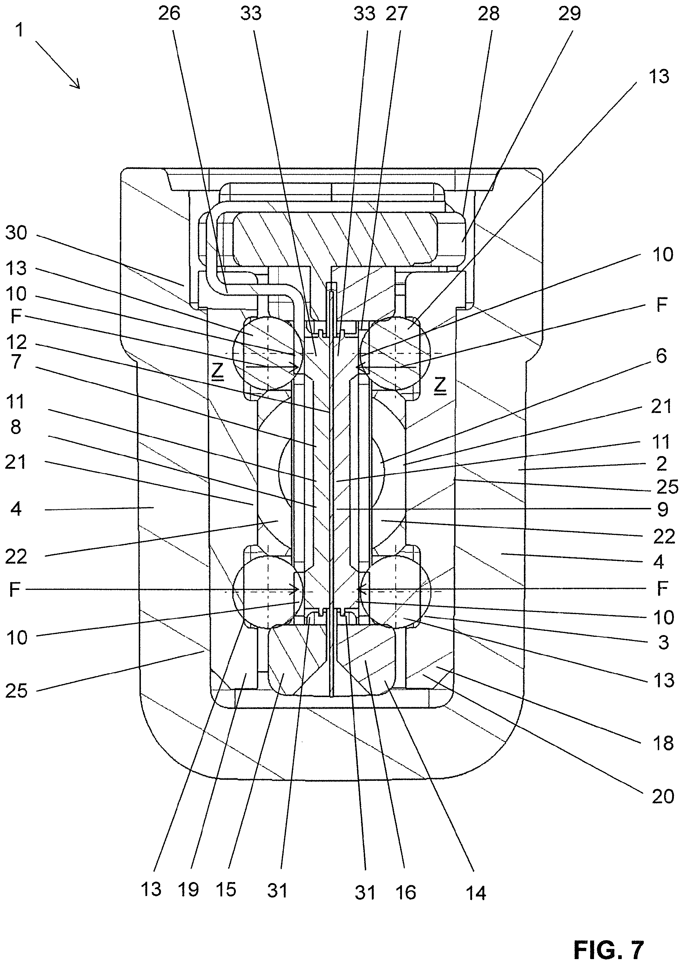

Weiter umfasst die Elektrodenanordnung 1 mindestens ein Federelement 13, welches zwischen der Seitenwand 4 des Innenraums 3 und der Elektrodenanordnung 8, 9 derart angeordnet ist, dass die beiden Elektroden 8, 9 gegeneinander gedrückt werden. Das heisst, das mindestens eine Federelement 13 drückt die beiden Elektroden 8, 9 jeweils auf die Membran 12 und somit werden die Elektroden 8, 9 gegeneinander angedrückt. Von den Schnittdarstellungen der Figuren 2 und 7 kann die Wirkung des mindestens einen Federelementes 13 gut erkannt werden. Da das mindestens eine Federelement 13 in den Zwischenraum Z zwischen der Seitenwand 4 und den Elektroden 8, 9 angeordnet ist, drückt das mindestens eine Federelement 13 auf die Elektroden 8, 9. In den gezeigten Ausführungsformen sind noch weitere Elemente im Zwischenraum Z angeordnet und das mindestens eine Federelement 13 wirkt über diese weiteren Elemente auf die Elektroden 8, 9. Diese weiteren Elemente werden untenstehend erläutert. Prinzipiell ist es aber denkbar, dass im Innenraum 3 lediglich die Elektrodeneinheit 7 mit den zwei Elektroden 8, 9 und der Membran 12 sowie das mindestens ein Federelement 13 abgeordnet ist. Die Kraft, welche vom Federelement 13 auf die beiden Elektroden 8, 9 sowie auf die Membran 12 ausgeübt wird, trägt das Bezugszeichen F und wird durch jeweilige Pfeile symbolisiert. Durch das mindestens eine Federelement 13 werden die Elektroden 8, 9 im Innenraum 3 verspannt.

Vorzugsweise erstreckt sich das mindestens eine Federelement 13 jeweils im Wesentlichen in Fliessrichtung. In den gezeigten Ausführungsformen ist jeweils je ein Federelement 13 seitlich zum wirksamen Elektrodenbereich 11 angeordnet. Die Federelemente 13 wirken dann zugleich als Leitelemente für die Strömung über den wirksamen Elektrodenbereich 11.

Die Lagerfläche 10 der einen Elektrode 8 ist im Wesentlichen deckungsgleich mit der Lagerfläche 10 der anderen Elektrode 9 angeordnet. Im eingebauten Zustand liegen dabei die Rückseiten der Lagerflächen 10 der beiden Elektroden 8, 9 über die Membran 12 miteinander in flächigem Kontakt. Das heisst, die eine Lagerfläche 10 der einen Elektrode 8 überlagert die andere Lagerfläche 10 der anderen Elektrode 9. Somit wird sichergestellt, dass die beiden Elektroden 8, 9 flächig gut aufeinander liegen.

In der ersten Ausführungsform gemäss den Figuren 1 bis 4 sind vier Federelemente 13 angeordnet. Die Federelemente 13 sind dabei derart angeordnet, dass diese beidseitig auf die Elektroden 8, 9 wirken. Es sind dabei zwei Federelemente 13 oberhalb des wirksamen Elektrodenbereiches 11 und zwei Federelemente 13 unterhalb des wirksamen Elektrodenbereiches 11 angeordnet. Die beiden benachbarten Federelemente 13 liegen jeweils auf gleicher Höhe im Innenraum 3 und klemmen so die Elektroden 8, 9 und die Membran 12 im Innenraum 3. Mit anderen Worten gesagt, ist auf beiden Seiten der beiden Elektroden 8, 9 mindestens je ein Federelement 13 angeordnet. Die Federelemente 13 nach den Figuren 1 bis 4 sind stegartige ausgebildet.

Das Federelement 13 in der Ausführungsform der Figuren 5 bis 7 ist als umlaufendes Federelement 13 ausgebildet. Das Federelement 13 kann sich dabei um die Elektroden 8, 9 herumerstrecken. Die Wirkung des Federelementes 13 gemäss der zweiten Ausführungsform ist aber gleich, wie diejenige der ersten Ausführungsform. Durch das Einbauen in den Innenraum 3 wird die entsprechende Kraft F aufgrund der Verklemmung des Federelementes 13 zwischen der Seitenwand 4 und den Elektroden 8, 9 aufgebracht.

In den gezeigten Ausführungsformen umfasst die Elektrodenanordnung 1 weiter ein optionales Trägerelement 14. Die Elektroden 8, 9 sind dabei in einer Elektrodenaufnahme 31 im Trägerelement 14 derart gelagert, dass der wirksame Elektrodenbereich 11 und die Lagerflächen 10 vom Trägerelement 14 freiliegen. Das Trägerelement 14 hat im Wesentlichen die Funktion, die Elektroden 8, 9 während des Einbaus in den Innenraum 3 zu lagern und anschliessend die Position in Querrichtung zur Wirkrichtung der Kraft F zu bestimmen. Die Elektroden 8, 9 sind in der Elektrodenaufnahme 31 schwimmend gelagert. Das heisst, dass sich die Elektroden 8, 9 in Richtung der Kraft F innerhalb eines Spiels in der Elektrodenaufnahme 31 bewegen können. Die Elektrodenaufnahme 31 hat in der gezeigten Ausführungsform die Gestalt eines Rahmens. Optionale Nocken 42 dienen der Positionierung der Elektroden 8, 9.

In den gezeigten Ausführungsformen ist das Trägerelement 14 aus zwei zusammenfügbaren Trägerteilen 15, 16 gebildet. Dabei ist die eine Elektrode 8 im einen Trägerteil 15 und die andere Elektrode 9 im anderen Trägerteil 16 schwimmend gelagert. Die Membran 12 liegt zwischen den beiden Trägerteilen 15, 16. Jedes der Trägerteile 15, 16 weist eine Aufnahmefläche 35 auf, auf welcher die Elektroden 8, 9 aufliegen. Seitlich ist die Aufnahmefläche 35 durch Stege 36 begrenzt. Die Trägerteile 15, 16 sind in der gezeigten Ausführungsform identisch zueinander ausgebildet und lassen sich zusammenstecken. Für die genaue Positionierung zueinander weisen die Trägerteile 15, 16 mindestens ein Positionierungsmittel 37 umfassend eine Öffnung und ein Nocken auf.

Weiter weist das Trägerelement 14, hier an den Trägerteilen 15, 16 eintrittsseitig eine bezüglich der Strömung optimierte Kante 17. Die Kante 17 ist dabei vorzugsweise derart optimiert, dass den wirksamen Elektrodenbereich 11 eine turbulente Strömung zuführbar ist. Die Kante 17 verläuft im Wesentlichen quer zur Fliessrichtung des Wassers im Innenraum 3.

Weiter weist das Trägerelement 14 eine Auskragung 41 auf, an welcher eine Lagerfläche 29 angeordnet ist. Über die Lagerfläche 29 kann das Trägerelement 14 in einer Aufnahme 30 des Gehäuses 2 im Innenraum 3 gelagert werden.

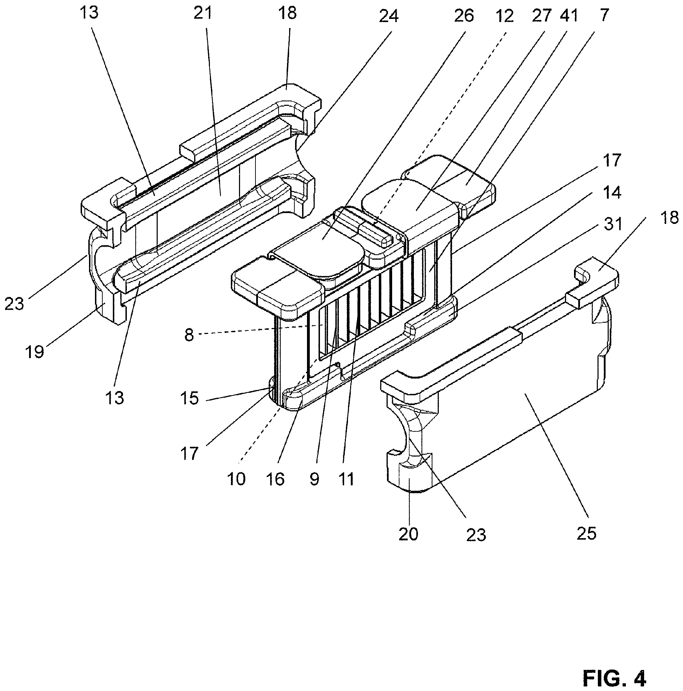

Weiter umfasst die Elektrodenanordnung 1 in den gezeigten Ausführungsformen ein optionales Strömungsführungselement 18. In den Figuren 4 und 6 wird das Strömungsführungselement 18 in einer Explosionsdarstellung beabstandet zu den Elektroden 8, 9 gezeigt. Das Strömungsführungselement 18 umgibt die Elektroden 8, 9 mindestens im wirksamen Elektrodenbereich 11. Das Strömungsführungselement 18 ist im Innenraum 3 des Gehäuses 2 platzierbar. Mit dem Strömungsführungselement 18 kann die Strömung im wirksamen Elektrodenbereich 11 optimal gesteuert werden, derart dass eine gute Durchmischung mit dem Ozon erreicht werden kann.

In den gezeigten Ausführungsformen weist das Strömungsführungselement 18 zwei Schalen 19, 20 auf. Die beiden Schalen 19, 20 sind beidseitig zu den Elektroden 8, 9 angeordnet und stehen mit einem Abstand beabstandet zu wirksamen Elektrodenoberfläche 11 und zwar derart, dass ein Wasserführungskanal 22 zwischen der wirksamen Elektrodenoberfläche 11 und der Innenwand 40 der Schalen 19, 22 geschaffen wird, durch welchen zu behandelndes Wasser hindurchgeführt wird. Das Strömungsführungselement 18 weist eine Eintrittsöffnung 23 und eine Austrittsöffnung 24 auf. Der Wassereingang 5 des Gehäuses 2 mündet dabei in die Eintrittsöffnung 23 und die Austrittsöffnung 24 führt zum Wasserausgang 6.

Das Strömungsführungselement 18 umgibt in den gezeigten Ausführungsformen im Wesentlichen die Elektrodenaufnahme 31 des Trägerelementes 14. Die Auskragung 41 wird durch das Strömungsführungselement 18 nicht umgeben. Das Trägerelement 14 ragt also mit der Elektrodenaufnahme 31 in das Strömungsführungselement 18 hier zwischen die beiden Schalen 19, 20 ein. Das Trägerelement 14 wird also im Bereich der Elektrodenaufnahme 31 durch das Strömungsführungselement 18 entsprechend umschlossen. Hierfür stellt das Strömungsführungselement 18 einen entsprechenden Zwischenraum 34 bereit.

In der Ausführungsform nach der Figur 1 bis 4 ist das Federelement 13 innenseitig am Strömungsführungselement 18, hier jeweils an der Innenwand 40 der beiden Schalen 19, 20 integral angeformt. Das Federelement 13 steht also fest mit der jeweiligen Schale 19, 20 in fester Verbindung. Die Aussenseite 25 der jeweiligen Schale 19, 20 liegt flächig an der Seitenwand 4 des Innenraums 3 an. In der gezeigten Ausführungsform wird also die Kraft F auf die beiden Elektroden 8, 9 auch über die Schalen 19, 20 aufgebracht.

Das Federelement 13 weist nach der ersten Ausführungsform die Gestalt eines Steges auf, welcher im Querschnitt gesehen im Wesentlichen trapezförmig ist.

In der Ausführungsform gemäss den Figuren 5 bis 7 ist ebenfalls ein Strömungsführungselement 18 angeordnet. Auch hier besteht das Strömungsführungselement 18 aus zwei Schalen 19, 20, die abgesehen vom Federelement 13 im Wesentlichen baugleich zum Strömungsführungselement 18 der Figuren 1 bis 4 ausgebildet ist. Die beiden Schalen 19, 20 weisen hier an der Innenseite 40 eine Fläche auf, an welcher die umlaufend ausgebildeten Federelemente 13, die hier separat von den Schalen 19, 20 ausgebildet sind, anliegen. Die Verspannung der Elektroden 8, 9 funktioniert aber gleich, wie bei der ersten Ausführungsform.

Die beiden Schalen 19, 20 des Strömungsführungselementes 18 sind über eine Raststruktur miteinander verbindbar. Die Raststruktur ist dabei derart ausgebildet, dass die beiden Schalen 19, 20 innerhalb eines vorbestimmten Spiels sich relativ zueinander bewegen können. Hierdurch wird sichergestellt, dass die beiden Schalen 19, 20 beim Einschieben in den Innenraum 3 sich im Rahmen der Elastizität des Federelementes 13 sich aufeinander zu bewegen.

In der gezeigten Ausführungsform ist weiter ein Kontaktelement 26, 27 angeordnet, dabei ist je ein Kontaktelement 26, 27 jeweils je einer Elektrode 8, 9 zugeordnet. Über dieses Kontaktelement 26, 27 können die Elektroden 8, 9 mit elektrischer Energie versorgt werden. Das Kontaktelement 26, 27 weist in der gezeigten Ausführungsform die Gestalt eines Rahmens auf. Der Rahmen trägt das Bezugszeichen 38. Der Rahmen steht in der gezeigten Ausführungsform in flächigem Kontakt mit dem Streifen 33 der Elektrode 8, 9. Das Federelement 13 wirkt in der gezeigten Ausführungsform über das Kontaktelement 26, 27 auf die Lagerfläche 10.

Das Kontaktelement 26, 27 weist jeweils einen Kontaktbereich 39 auf. Der Kontaktbereich 39 wird in der gezeigten Ausführungsform um das Trägerelement 14 herumgeführt und ist dann durch die Zugangsöffnung 28 in den Innenraum 3 entsprechend zugänglich. Es kann ein elektrischer Anschluss an der Kontaktfläche 39 angeschlossen werden.

Von der Figur 1 kann gut erkannt werden, dass der Wassereingang 5 und der Wasserausgang 6 in einer gemeinsamen die Fliessrichtung definierenden Achse A liegen. Quer zur Achse A weist der Innenraum 3 die besagte Zugangsöffnung 28 auf, durch welche die Elektrodeneinheit 7 gegebenenfalls mit dem Trägerelement 14, gegebenenfalls mit dem Strömungsführungselement 18 und gegebenenfalls mit den Kontaktelementen 26, 27 einsetzbar ist.

**BEZUGSZEICHENLISTE**

| | | | |
|---|---|---|---|
| 1 | Elektrodenanordnung | 29 | Lagerflächen |
| 2 | Gehäuse | 30 | Aufnahme |
| 3 | Innenraum | 31 | Elektrodenaufnahme |
| 4 | Seitenwand | 32 | Steg |
| 5 | Wassereingang | 33 | Streifen |
| 6 | Wasserausgang | 34 | Zwischenraum |
| 7 | Elektrodeneinheit | 35 | Aufnahmefläche |
| 8 | Elektrode | 36 | Stege |
| 9 | Elektrode | 37 | Positionierungsmittel |
| 10 | Lagerfläche | 38 | Rahmen |
| 11 | wirksamer Elektrodenbereich | 39 | Kontaktfläche |
| 12 | Membran | 40 | Innenwand |
| 13 | Federelement | 41 | Auskragung |
| 14 | Trägerelement | 42 | Nocken |
| 15 | Trägerteil | A | Achse |
| 16 | Trägerteil | Z | Zwischenraum |
| 17 | Kante | F | Kraft |
| 18 | Strömungsführungselement | | |
| 19 | Schale | | |
| 20 | Schale | | |
| 21 | Strömungsoberfläche | | |
| 22 | Wasserführungskanal | | |
| 23 | Eintrittsöffnung | | |
| 24 | Austrittsöffnung | | |
| 25 | Aussenseite | | |
| 26 | Kontaktelement | | |
| 27 | Kontaktelement | | |
| 28 | Zugangsöffnung | | |

## Patentansprüche

1. Elektrodenanordnung (1) umfassend
ein Gehäuse (2) mit einem Innenraum (3), der mit einer umlaufenden Seitenwand (4) begrenzt ist, und mit einem in den Innenraum (3) mündenden Wassereingang (5) sowie einem von Innenraum (3) abgehenden Wasserausgang (6),
eine im Innenraum (3) angeordnete Elektrodeneinheit (7) mit zwei Elektroden (8, 9), die jeweils Lagerflächen (10) und ein wirksamer Elektrodenbereich (11) aufweisen, und einer zwischen den Elektroden (8, 9) liegenden Membran (12), und
mindestens ein Federelement (13), welches zwischen der Seitenwand (4) und der Elektroden (8, 9) derart angeordnet ist, dass die beiden Elektroden (8, 9) gegeneinander gedrückt werden.

2. Elektrodenanordnung (1) nach Anspruch 1, **dadurch gekennzeichnet, dass** die Lagerflächen (10) auf mindestens zwei Seiten des wirksamen Elektrodenbereichs (11) sich erstrecken, wobei das mindestens eine Federelement (13) auf die Lagerflächen (10) wirkt.

3. Elektrodenanordnung (1) nach einem der vorhergehenden Ansprüche, **dadurch gekennzeichnet,**
**dass** sich das mindestens eine Federelement (13) im Wesentlichen in Fliessrichtung erstreckt, wobei je ein Federelement (13) seitlich zum wirksamen Elektrodenbereich (11) angeordnet ist, welche Federelemente (13) zugleich als Leitelement für die Strömung wirkt;
und/oder
**dass** beidseitig zu den Elektroden (8, 9) mindestens je ein Federelement (13) angeordnet ist, wobei die besagten Federelemente (8, 9) bezüglich des Innenraums (3) gegenüber einander angeordnet sind.

4. Elektrodenanordnung (1) nach einem der vorhergehenden Ansprüche, **dadurch gekennzeichnet, dass** die Lagerfläche (10) der einen Elektrode (8) deckungsgleich mit der Lagerfläche (10) der anderen Elektrode (9) angeordnet ist, wobei die Rückseiten der Lagerflächen (10) der beiden Elektroden (8, 9) in Einbaulage über die Membran (12) miteinander in flächigem Kontakt sind.

5. Elektrodenanordnung (1) nach einem der vorhergehenden Ansprüche, **dadurch gekennzeichnet, dass** das mindestens eine Federelement (13) beidseitig auf die Elektroden (8, 9) wirkt, wobei das mindestens eine Federelement (13) umlaufend ausgebildet ist; oder wobei auf beiden Seiten der beiden Elektroden mindestens je ein Federelement (13) angeordnet ist.

6. Elektrodenanordnung (1) nach einem der vorhergehenden Ansprüche, **dadurch gekennzeichnet, dass** die Elektrodenanordnung (1) weiter ein Trägerelement (14) umfasst, wobei die Elektroden (8, 9) in einer Elektrodenaufnahme (31) im Trägerelement (14) derart gelagert sind, dass der wirksame Elektrodenbereich (11) und die Lagerflächen (10) vom Trägerelement (14) frei liegen.

7. Elektrodenanordnung (1) nach Anspruch 6, **dadurch gekennzeichnet,**
**dass** das Trägerelement (14) zwei zusammenfügbare Trägerteile (15, 16) aufweist, wobei die eine Elektrode (8) im einen Trägerteil (15) und die andere Elektrode (9) im anderen Trägerteil (16) schwimmend gelagert ist und wobei die Membran (12) vorzugsweise zwischen den beiden Trägerteilen (15, 16) liegt; und/oder
**dass** das Trägerelement (14) eintrittsseitig eine bezüglich der Strömung optimierte Kante (17) aufweist, wobei die Kante (17) derart optimiert ist, dass dem wirksamen Elektrodenbereich (11) eine turbulente Strömung zuführbar ist; und/oder
**dass** das Trägerelement (14) Lagerflächen (29) aufweist, mit welchen das Trägerelement in einer Aufnahme (30) im Innenraum (3) gelagert ist.

8. Elektrodenanordnung (1) nach einem der vorhergehenden Ansprüche, **dadurch gekennzeichnet, dass** die Elektrodenanordnung (1) weiter ein Strömungsführungselement (18) aufweist, welches die Elektroden (8, 9) mindestens im wirksamen Elektrodenbereich (11) umgibt, und welches Strömungsführungselement (18) im Innenraum (3) des Gehäuses (2) platzierbar ist.

9. Elektrodenanordnung (1) nach Anspruch 8, **dadurch gekennzeichnet, dass** das Strömungsführungselement (18) zwei Schalen (19, 20) umfasst, welche beidseitig zu den Elektroden (8, 9) angeordnet sind, wobei die Schalen (19, 20) mit einer der Elektrode (8, 9) zugewandten Strömungsoberfläche (21) derart mit einem Abstand beabstandet zur wirksamen Elektrodenoberfläche (11) liegen, dass ein Wasserführungskanal (22) geschaffen wird, durch welchen zu behandelndes Wasser hindurch geführt wird.

10. Elektrodenanordnung (1) nach Anspruch 8 oder 9, **dadurch gekennzeichnet, dass** das Strömungsführungselement (18) eine Eintrittsöffnung (23) und eine Austrittsöffnung (24) aufweist, wobei der Wassereingang (5) in die Eintrittsöffnung (23) mündet und wobei die Austrittsöffnung (24) zum Wasserausgang (6) führt.

11. Elektrodenanordnung (10) nach einem der Ansprüche 8 bis 10, **dadurch gekennzeichnet, dass** das mindestens eine Federelement (13) am Strömungsführungselement (18), insbesondere an der Schale (19, 20), integral angeformt ist; oder dass das mindestens eine Federelement (13) als separates Element ausgebildet ist und die Elektroden (8, 9) sowie gegebenenfalls das Trägerelement (14) umlaufend umgibt.

12. Elektrodenanordnung (10) nach einem der Ansprüche 4 bis 12, **dadurch gekennzeichnet, dass** das Trägerelement (14) mindestens mit der Elektrodenaufnahme (31) in das Strömungsführungselement (18), insbesondere zwischen die beiden Schalen (19, 20), einragt, und dass das mindestens eine Federelement (13) durch das Trägerelement (14) hindurch auf die vom Trägerelement (14) frei liegenden Bereiche der Lagerflächen (10) einwirkt.

13. Elektrodenanordnung (10) nach einem der vorhergehenden Ansprüche 7 bis 12, **dadurch gekennzeichnet,**
**dass** die beiden Schalen (19, 20) miteinander über eine Raststruktur verbindbar sind, wobei die Raststruktur eine Bewegung der beiden Schalen (19, 20) innerhalb eines vorbestimmten Spiels erlaubt;
und/oder dass die Aussenseite (25) der Schalen (19, 20) an der Seitenwand (4) des Innenraums (3) anliegen.

14. Elektrodenanordnung (10) nach einem der vorhergehenden Ansprüche, **dadurch gekennzeichnet, dass** pro Elektrode (8, 9) weiter ein Kontaktelement (26, 27), insbesondere ein Kontaktblech angeordnet ist, über welches die Elektrode (8, 9) mit elektrischer Energie versorgbar ist, wobei das Kontaktelement (26, 27) vorzugsweise flächig auf der Lagerfläche (10) der Elektrode aufliegt und wobei das Federelement (13) vorzugsweise über das Kontaktelement (26, 27) auf die Lagerfläche (10) wirkt.

15. Elektrodenanordnung (10) nach einem der vorhergehenden Ansprüche, **dadurch gekennzeichnet, dass** der Wassereingang (5) und der Wasserausgang (6) in einer gemeinsamen, die Fliessrichtung definierenden, Achse liegen, wobei quer zur Achse gesehen der Innenraum (3) eine Zugangsöffnung (28) aufweist, durch welche die Elektrodeneinheit (7) gegebenenfalls mit dem Trägerelement (14) und/oder gegebenenfalls mit dem Strömungsführungselement (18) und/oder oder gegebenenfalls mit den Kontaktelemente (26, 27) einsetzbar ist, wobei die Zugangsöffnung (28) sich im Wesentlichen vollständig über den Querschnitt des Innenraums (3) erstreckt, und wobei die Zugangsöffnung (18) durch einen optionalen Deckel verschlossen ist.

16. Verfahren zur Montage einer Elektrodenanordnung nach einem der vorhergehenden Ansprüche, **dadurch gekennzeichnet, dass**
die beiden Elektroden (8, 9) und die Membran (12) relativ zueinander positioniert werden;
bei Vorhandensein des Trägerelementes (14) die Elektroden (8, 9) in das Trägerelement (14) eingesetzt werden;
bei Vorhandensein der Kontaktelemente (26, 27) die Kontaktelemente (8, 9) an die Elektroden angelegt werden;
bei Vorhandensein des Strömungsführungselement (18) die Elektroden (8, 9) ggf. mit Teilen des Trägerelement (14) und Teil der Kontaktelementen (26, 27) in das Strömungsführungselement (18) eingesetzt werden;
in einem weiteren Schritt die Elektroden (8, 9) ggf. mit dem Trägerelement (14) und/oder ggf. mit den Kontaktelementen (26, 27) und/oder ggf. mit dem Strömungsführungselement (18) in den Innenraum (3) des Gehäuses (2) eingesetzt werden und dort mit der Federkraft des Federelementes (13) gegeneinander gedrückt werden.
